# EUROPEAN PATENT SPECIFICATION

(11) **EP 1 918 165 B1**
(45) Date of publication and mention of the grant of the patent: **26.08.2009**
(21) Application number: 07019530.0
(22) Date of filing: 05.10.2007
(51) Int. Cl.: B60R 22/34

(54) **Seat belt retractor and seat belt apparatus comprising the same**
Sicherheitsgurtaufroller und Sicherheitsgurtvorrichtung damit
Rétracteur de ceinture de sécurité et son appareil de ceinture de sécurité

(30) Priority: 01.11.2006 JP 2006298014
(43) Date of publication of application: 07.05.2008
(73) Proprietor: TAKATA CORPORATION, Minato-ku, Tokyo 106-8510 (JP)
(72) Inventor: HIRAMATSU, Koji c/o Takata Corporation, Minato-ku Tokyo 106-8510 (JP)
(74) Representative: Banzer, Hans-Jörg

(56) References cited:
- EP-A- 0 985 847
- EP-A- 1 180 457
- EP-A- 1 717 113
- EP-A- 1 867 533
- WO-A-97/49583
- WO-A-98/36951

## Description

The present invention relates to a technical field of a seat belt retractor for winding up a seat belt with allowing winding and withdrawal of the seat belt and, more particularly, to a technical field of a seat belt retractor having an energy absorbing mechanism (sometimes called "EA mechanism") in which load on a seat belt generated when an occupant wears the seat belt and the withdrawal of the seat belt is prevented in the event of an emergency such as a vehicle collision that a large deceleration acts on a vehicle is limited by an energy absorber such as torsional deformation of a torsion bar so as to absorb energy applied to the occupant, and to a seat belt apparatus comprising the seat belt retractor.

### Related Art

Conventionally, seat belt apparatuses are installed in vehicles such as automobiles. In the event of an emergency as mentioned above, such a seat belt apparatus restrains an occupant with a seat belt thereof so as to prevent the occupant from jumping out of the seat. Such a seat belt apparatus is provided with a seat belt retractor for winding up the seat belt. In the seat belt retractor, the seat belt is wound onto a spool when it is not in use and is withdrawn and worn by an occupant when it is in use. The locking means of the seat belt retractor is actuated to prevent the spool from rotating in the belt withdrawing direction in the event of an emergency as mentioned above, thereby preventing the seat belt from being withdrawn. Therefore, the seat belt can restrain the occupant in the event of an emergency.

By the way, in the conventional seat belt retractor of the seat belt apparatus, a large vehicle deceleration is generated when the seat belt restrains the occupant in the event of an emergency such as a vehicle collision so that the occupant tends to move forward due to large inertia. Accordingly, a large load is applied to the seat belt and the occupant receives a large force from the seat belt. Though this force is not serious problem to the occupant, the force is preferable to be limited.

Conventionally, therefore, a seat belt retractor has been developed which is provided with a torsion bar for limiting the load on a seat belt to absorb and reduce energy applied to an occupant in the event of emergency when the occupant wears the seat belt (for example, see JP-A-2001-058559).

Fig. 10 is a vertical sectional view showing an example of the seat belt retractor disclosed in JP-A-2001-058559. In this drawing, a numeral 1 designates a seat belt retractor, a numeral 2 designates a U-like frame, a numeral 3 designates a seat belt, a numeral 4 designates a spool which is rotatably supported between both side walls of the U-like frame 2 to wind up the seat belt 3, a numeral 5 designates a deceleration sensing means which senses a large vehicle deceleration, generated in the event of an emergency as mentioned above, and thus activates, a numeral 6 designates a locking means which is activated by the deceleration sensing means 5 to prevent at least the spool 4 from rotating in the seat belt withdrawing direction, a numeral 7 designates a torsion bar which is fitted and inserted into the center of the spool 4 in the axial direction and connects the spool 4 and the locking means 6 to be rotated together, a numeral 8 designates a spring means which always biases the spool 4 in the seat belt winding direction via a bush 10 by spring force of a spiral spring 9, a numeral 11 designates a pretensioner which is activated in the event of an emergency as mentioned above to produce a seat belt winding torque, and a numeral 12 designates a bush for transmitting the seat belt winding torque of the pretensioner 11 to the spool 4.

The locking means 6 is provided with a locking base (corresponding to a locking member of the present invention) 14 which can rotate together with a first torque transmitting shaft 17 of the torsion bar 7 and holds a pawl 13 pivotally. The locking means 6 is also provided with a lock gear 6a which normally rotates together with the torsion bar 7 but, in an emergency, stops by the operation of the deceleration sensing means 5 to produce a rotational difference relative to the torsion bar 7 so that the pawl 13 is engaged with internal teeth 19 formed in a side wall of the frame 2 to prevent the rotation of the locking base 14 in the seat belt withdrawing direction. The locking base 14 is provided with an external threaded shaft portion 15 on which a nut-like stopper member 16 rotating together with the spool 4 is screwed.

The torsion bar 7 is provided with the first torque transmitting portion 17 which is engaged with the locking base 14 not to allow the relative rotation therebetween and a second torque transmitting portion 18 which is engaged with the spool 4 not to allow the relative rotation therebetween.

By the spring force of the spring means 8, the spool 4 is always biased in the seat belt winding direction via the bush 10, the torsion bar 7, the second torque transmitting portion 18 of the torsion bar 7, and the bush 12. In addition, during the operation of the pretensioner 11, the seat belt winding torque produced by the pretensioner 11 is transmitted to the spool 4 via the bush 12, whereby the spool 4 winds up a predetermined amount of the seat belt 3.

In the conventional seat belt retractor 1 having the aforementioned structure, the seat belt 3 is fully wound up by the biasing force of the spring means 8 when the seat belt is not worn. As the seat belt 3 is withdrawn at a normal speed from this state for wearing the seat belt, the spool 4 rotates in the seat belt withdrawing direction, thereby withdrawing the seat belt 3 smoothly. After the tongue (not shown) slidably attached to the seat belt 3 is inserted into and latched to the buckle (not shown) fixed to the vehicle body, an excessively withdrawn part of the seat belt 3 is wound onto the spool 4 by the biasing force of the spring means 8, whereby the seat belt 3 fits the occupant without giving undesired oppression on the occupant.

In an emergency as mentioned above, the seat belt winding torque produced by the pretensioner 11 is transmitted to the spool 4 so that the spool 4 winds up a predetermined amount of the seat belt 3 so as to restrain the occupant firmly. On the other hand, the deceleration sensing means 5 senses a produced large vehicle deceleration and activates the locking means 6. That is, by the activation of the deceleration sensing means 5, the lock gear 6a is prevented from rotating in the seat belt withdrawing direction so that the pawl 13 of the locking means 6 pivots to engage the internal teeth 19 formed in the side wall of the frame 2. Then, the locking base 14 is prevented from rotating in the seat belt withdrawing direction so that the torsion bar 7 is twisted so as to allow only rotation of the spool 4 relative to the locking base 14 in the seat belt withdrawing direction. After this, the spool 4 rotates in the seat belt withdrawing direction while twisting the torsion bar 7. According to the torsional torque of the torsion bar 7, the load applied to the seat belt 3 is limited, thereby absorbing energy applied to the occupant.

As the spool 4 rotates relative to the locking base 14, the stopper member 16 rotating together with the spool 4 rotates relative to the external threaded shaft portion 15 on which the stopper member 16 screws, whereby the stopper member 16 moves toward the locking base 14. As the stopper member 16 comes in contact with the locking base 14, the further rotation of the stopper member 16 is prevented, thereby preventing the rotation of the spool 4 so as to stop the twisting of the torsion bar 7. In this manner, the seat belt 3 is prevented from being withdrawn so that the occupant is restrained by the seat belt 3 and, in addition, the maximum twisting amount of the torsion bar 7 is limited so that the torsion bar 7 is prevented from being cut due to the twisting.

In the conventional seat belt retractor 1, the locking base 14 of the locking means 6 is allowed to rotate relative to the lock gear 6a in the seat belt withdrawing direction also when the seat belt is rapidly withdrawn. Accordingly, the pawl 13 of the locking means 6 engages the internal teeth 19 formed in the side wall of the frame 2 so as to prevent the locking base 14 from rotating, thereby preventing the spool 4 from rotating in the belt withdrawing direction via the torsion bar 7 and preventing the seat belt from being withdrawn.

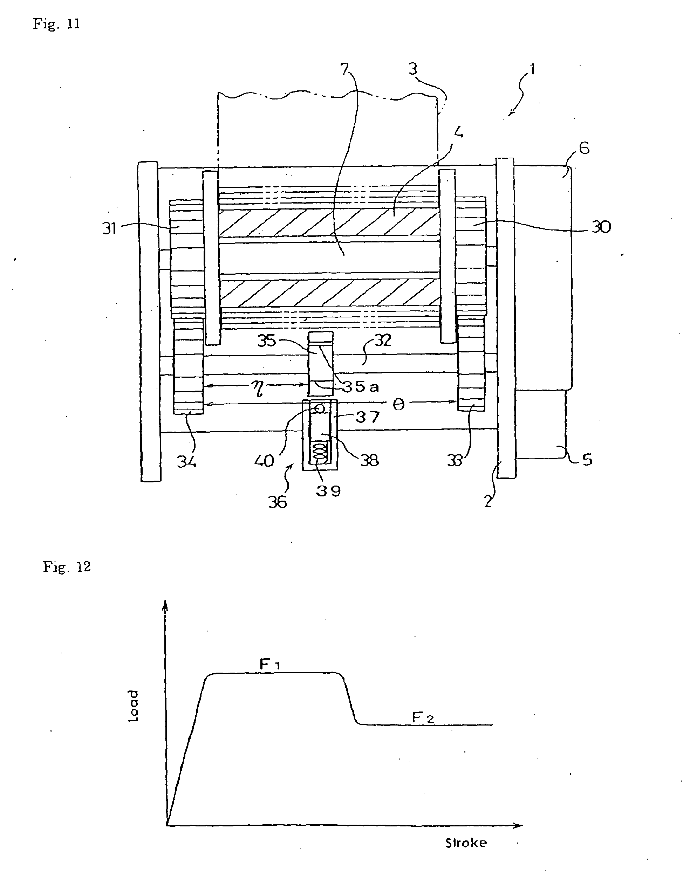

Further, JP-A-2001-058559 discloses a seat belt retractor 1 in which the limited load can be changed. That is, as shown in Fig. 11, a lock member 38 is normally prevented from projecting out of a cylinder member 37 by a lock pin 40 of an EA load switching mechanism 36. As the locking base is prevented from rotating in the belt withdrawing direction in the event of a collision which is so large as to activate the pretensioner, a gear 30 disposed on the locking base is also prevented from rotating in the same direction so that a gear 33 always meshing with the gear 30 is also prevented from rotating. Since the seat belt 3 is biased to be withdrawn by the inertia of the occupant, the spool 4 still rotates in the belt withdrawing direction. Accordingly, a gear 31 which is disposed on the spool 4 to rotate together with the spool 4 also rotates in the same direction so that a gear 34 always meshing with the gear 31 also rotates.

On the other hand, in an initial stage after the large collision, the lock pin 40 is blown off by gas discharged from the pretensioner so that the lock member 38 projects out of the cylinder member 37 by the spring force of a spring 39. Then, ratchet teeth 35a of a lock wheel 35 engages the lock member 38 so that the lock wheel 35 is prevented from rotating in the belt withdrawing direction. Therefore, a portion η of a second torsion bar 32 is twisted. The length of the portion η is shorter than the entire length θ of the second torsion bar 32. By the twisting of the first torsion bar 7 and the twisting of the portion η of the second torsion bar 32, EA action by the EA mechanism starts. The FL load F₁ at this point is relatively large as shown in Fig. 12. In a subsequent stage following the initial stage, the portion η of the second torsion bar 32 is twisted a predetermined amount and is thus broken. After the breakage of the second torsion bar 32, the EA action is conducted solely by the twisting of the first torsion bar 7. The FL load F₂ at this point is smaller than that in the initial stage as shown in Fig. 12. In this manner, the FL load is changed, whereby the limited load applied to the seat belt can be flexibly set to various values corresponding to the restrained state of the occupant by an airbag and the like in the event of an emergency.

As other examples of conventional EA mechanisms, an EA mechanism in which a wire member attached to a locking base is pulled forcibly along a curved path formed by engaging pins attached to a spool (for example, see JP-A-2002-053007), an EA mechanism in which a band-like plate of which one end is attached to a spool is deformed forcibly by a guide groove formed in a locking base where (for example, see JP-A-2000-085527), an EA mechanism in which a cylindrical member attached to a spool is plastically deformed by an engaging portion attached to a locking base (for example, see JP-A-2002-053008), an EA mechanism in which a U-like plate material of which one end is attached to a locking base and the other end is engaged with a spool is deformed (for example, see JP-A-10-258702), an EA mechanism in which work member attached to a spool is scraped by a cutter attached to a locking base (for example, see JP-A-2001-106025) have been proposed.

However, though the seat belt retractor disclosed in JP-A-2001-058559 can set the limited load variably corresponding to the restrained state of the occupant, the limited load at the initial stage after a vehicle collision can be set to only one value. In the initial stage after vehicle collision, the energy applied to the occupant should be large. The energy depends on the physical size of the occupant such as weight, the position of a seat in the anteroposterior direction, the collision speed, the collision acceleration, and the type of collision. If the limited load can be set to various detailed values corresponding to the energy applied to the vehicle occupant in the initial stage, the occupant can be effectively and suitably restrained as compared to the case providing only one limited load.

Therefore, a seat belt retractor has been proposed in which the limited load applied to the seat belt can be further flexibly and variably set (for example, see JP-A-2006-062632).

The seat belt retractor of JP-A-2006-062632 comprises one rotary shaft parallel with and above a spool and two EA mechanisms having different EA characteristics which are disposed on the rotary shaft. The EA mechanisms are adapted such that either one or both of them are selectively actuated according to the emergency situation. Since the two EA mechanisms can be selectively actuated, the limited load applied to the seat belt is flexibly and variably set depending on the emergency situation.

### Problems to be solved by the Invention

By the way, the seat belt retractor disclosed in JP-A-2006-062632 as mentioned above has a relatively large size in the vertical direction because the seat belt retractor comprises another rotary shaft besides the rotary shaft of the spool and the another rotary shaft is disposed above the spool with some space from the spool.

Recently, it is desired to minimize the size of seat belt retractor used in a vehicle cabin for the purpose of ensuring the usable space in the vehicle cabin as large as possible.

The inventor of the present invention, therefore, has developed a seat belt retractor which is miniaturized and still has a function of further flexibly and variably setting the limited load applied to the seat belt corresponding to the emergency situation see JP-A-2005-127943.

The seat belt retractor comprises a torsion bar as a first EA mechanism which is disposed within a spool for winding a seat belt and coaxially with the spool and a second EA mechanism which is disposed at an end of the spool and coaxially with the spool. Since the second EA mechanism is disposed coaxially with the spool, the seat belt retractor is miniaturized and still has a function of variably setting the limited load applied to the seat belt corresponding to the emergency situation.

By the way, in the prior invention (Patent application No. 2005-127943), an energy absorber supporting member is normally prevented from rotating and the second EA mechanism is allowed to operate in the normal state. Accordingly, a clutch mechanism which does not transmit the rotation of the spool to the second EA mechanism in the normal state is required, thus increasing the number of parts and yet making the structure of the second EA mechanism complex.

Also in the prior invention, the second EA mechanism is adapted to operate via the clutch mechanism only when a pawl of a locking means engages internal teeth of a frame so as to lock a locking base from rotating. This means that the start of operation of the second EA mechanism is subject to the locking of the locking base from rotating and the independent operation of the second EA mechanism is not allowed. Accordingly, the start of operation of the second EA mechanism is restricted.

A seat belt retractor according to the pre-amble of claim 1 is known from WO 97/49583.

The present invention was made under the aforementioned circumstances and an object of the present invention is to provide a seat belt retractor which is further miniaturized, still has a function of further flexibly set the limited load applied to the seat belt corresponding to the emergency situation, and has a simple structure of allowing independent operation of the second EA mechanism, and a seat belt apparatus comprising such a seat belt retractor.

### Means to solve the Problems

According to the invention, this object is achieved by a seat belt retractor as defined in claim 1 and a seat belt apparatus as defined in claim 6. The dependent claims define preferred and advantageous embodiments of the invention.

To solve the aforementioned problems, a seat belt retractor according to the invention comprises a spool for winding up a seat belt, and a locking means having a locking member to which the rotation of said spool is normally transmitted via a first seat belt load limiting mechanism so that the locking member rotates together with the spool and which is prevented from rotating in the seat belt withdrawing direction in the event of an emergency, wherein when said locking member is prevented from rotating in the seat belt withdrawing direction so that said spool rotates relative to said locking member in the seat belt withdrawing direction, the load applied to said seat belt is limited by said first seat belt load limiting mechanism, and is characterized by further comprising a second seat belt load limiting mechanism provided coaxially with said spool for changing the limited load of the seat belt in the event of an emergency according to information in the emergency situation such as the physical size of an occupant, the position of a seat in the anteroposterior direction, the collision speed, the collision acceleration, and the type of collision, and further comprising a control unit which sets said second seat belt load limiting mechanism to the non-operational state normally and when a predetermined condition is not satisfied even in the event of an emergency and sets said second seat belt load limiting mechanism to the operational state when the predetermined condition is satisfied in the event of an emergency.

Said second seat belt load limiting mechanism comprises an energy absorber supporting member which is arranged coaxially with said spool and is rotatable relative to said spool, and an energy absorber which is disposed between said spool and said energy absorber supporting member and absorbs energy when said energy absorber supporting member rotates relative to said spool, wherein said control unit sets said energy absorber supporting member to be allowed to rotate together with said spool normally and when the predetermined condition is not satisfied even in the event of an emergency and sets said energy absorber supporting member to be allowed to rotate relative to said spool when the predetermined condition is satisfied in the event of an emergency.

Said energy absorber includes an elongated band-like energy absorbing plate.

A seat belt retractor according to the invention may further comprise a third seat belt load limiting mechanism for limiting load applied to said seat belt in the event of an emergency, wherein said third seat belt load limiting mechanism is disposed between said spool and said locking member.

When said locking member is prevented from rotating in the seat belt withdrawing direction so that said spool rotates relative to said locking member in the seat belt withdrawing direction, the load applied to said seat belt may be first limited by the first and third seat belt load limiting mechanisms or the load applied to said seat belt may be first limited by the first through third seat belt load limiting mechanisms and the load applied to said seat belt may be at least finally limited solely by the first seat belt load limiting mechanism.

According to another embodiment of the invention, said third seat belt load limiting mechanism comprises an energy absorbing pin which is slidably inserted to an elongated axial hole formed in said spool and penetrates said locking member, wherein when said spool rotates relative to said locking member in the seat belt withdrawing direction, the load applied to said seat belt is limited by the pulling load when said energy absorbing pin is pulled from the axial hole of said spool.

Said first seat belt load limiting mechanism may include a torsion bar disposed between said spool and said locking member.

A seat belt apparatus according to the invention comprises at least: a seat belt retractor which winds up a seat belt; a tongue slidably supported by said seat belt withdrawn from the seat belt retractor; and a buckle to which said tongue can be detachably latched, wherein the withdrawing of said seat belt is prevented by the seat belt retractor in the event of an emergency, thereby restraining an occupant, and is characterized in that said seat belt retractor is a seat belt retractor as mentioned above.

### Effects of the Invention

According to a seat belt retractor having the aforementioned structure and a seat belt apparatus comprising the same, the limited load of the seat belt in the event of an emergency is changed based on, for example, preliminary information (such as the weight of an occupant and the position of a seat in the anteroposterior direction), collision-predicting information for predicting a collision, and information indicating the degree of the collision (such as the collision speed, the acceleration and deceleration during the collision, and the type of collision). Thus, the limited load of the seat belt during a collision can be set more flexibly and variously in accordance with the information in the emergency situation, such as the physical size of the occupant and the conditions of the collision. Accordingly, the occupant can be more effectively and suitably restrained during a collision.

Furthermore, since the second seat belt load limiting mechanism is disposed integrally and coaxially with the spool, the seat belt retractor can be made compact in size in the vertical direction. Thus, the usable space inside the vehicle cabin can be increased.

Since the energy absorber supporting member is normally allowed to rotate so that the second seat belt load limiting mechanism is normally not allowed to operate, a clutch mechanism as used in the aforementioned prior invention is not required. Therefore, the number of parts can be reduced and the second seat belt load limiting mechanism is achieved by a simple structure.

Further, the second seat belt load limiting mechanism can be independently operated without being subject to that the locking base is prevented from rotating.

The limited load of the seat belt in the event of an emergency can be set effectively by combining the second seat belt load limiting mechanism of which load limit is alternative with the first seat belt load limiting mechanism and the third seat belt load limiting mechanism of which load limits are alternative. This enables further effective and suitable restraint of the occupant during a collision.

When the rotation of the locking member in the seat belt withdrawing direction is stopped so that the spool rotates relative to the locking member in the seat belt withdrawing direction, the load applied to the seat belt is first limited by the first and third seat belt load limiting mechanisms or the load applied to the seat belt is first limited by the first through third seat belt load limiting mechanisms. Then, at least finally the load applied to the seat belt is limited solely by the first seat belt load limiting mechanism. Therefore, when the rotation of the locking member in the seat belt withdrawing direction is stopped so that the spool rotates relative to the locking member in the seat belt withdrawing direction, the load applied to the seat belt can be first substantially limited by the combination of the first and third seat belt load limiting mechanisms or the combination of the first through third seat belt load limiting mechanisms and then finally limited solely by the first seat belt load limiting mechanism.

Conventionally, the seat belt apparatus cooperates with an air bag to restrain and protect an occupant in the event of an emergency. The energy applied to the occupant in the event of an emergency (normally, called "chest G") is first small because the energy applied only by the seat belt and is gradually increased after the airbag comes in contact with the occupant because the energy applied by the airbag is added. By the invention according to the first embodiment, the energy applied to the occupant can be absorbed uniformly and efficiently for any of occupants having various physical sizes by limiting the load of the seat belt even though the airbag is activated in the event of an emergency so that the energy of the airbag is added.

That is, in the event of an emergency, the load applied to the seat belt is first limited by the first and third seat belt load limiting mechanisms in case of a small occupant, while the load is first limited by the first through third seat belt load limiting mechanisms in case of a large occupant, whereby the absorption of energy applied to the occupant when the airbag is activated is uniformized for any of occupants having various physical sizes. Since the first limited load is changed according to the physical size, the energy absorption is effectively conducted appropriately for the physical size of the occupant.

### Brief Explanation of the drawings

Fig. 1 is an illustration schematically showing an embodiment of a seat belt retractor according to the present invention, some component being omitted.

Figs. 2(a), 2(b) are illustrations schematically showing a second EA mechanism of the seat belt retractor shown in Fig. 1, wherein Fig. 2(a) is an illustration showing the non-operational state thereof and Fig. 2(b) is an illustration showing the operational state thereof. These are partially enlarged views.

Fig. 3 is a block diagram for controlling the second EA mechanism of the seat belt retractor of the embodiment shown in Fig. 1.

Figs. 4(a)-4(c) are illustrations for explaining the EA actions when the second EA mechanism of the seat belt retractor of the embodiment shown in Fig. 1 is operated and Fig. 4(d) is an illustration showing limited load.

Figs. 5(a)-5(c) are illustrations for explaining the EA actions when the second EA mechanism of the seat belt retractor of the embodiment shown in Fig. 1 is not operated and Fig. 5(d) is an illustration showing limited load.

Fig. 6 is an illustration of an embodiment of a seat belt apparatus to which the seat belt retractor of the embodiment shown in Fig. 1 is applied.

Fig 7 is a sectional view similar to Fig. 1 but showing another embodiment of the seat belt retractor according to the present invention.

Figs. 8(a)-8(d) are illustrations for explaining a third EA mechanism by an energy absorbing pin for the seat belt retractor of the embodiment shown in Fig. 7, wherein Fig. 8(a) is an illustration for explaining the state before the pulling of the pin, Fig. 8(b) is an illustration for explaining the state in the middle of the pulling of the pin, and Fig. 8(c) is an illustration for explaining the state that the entire length of the pin is pulled.

Figs. 9(a), 9(b) are graphs for explaining the limited load of the seat belt in the seat belt retractor of the embodiment shown in Fig. 7, wherein Fig. 9(a) is a graph showing the limited load when all of the first through third EA mechanisms are operated and Fig. 9(b) is a graph showing the limited load when the first and third EA mechanisms are operated.

Fig. 10 is a vertical sectional view showing an example of a seat belt retractor provided with a conventional torsion bar.

Fig. 11 is an illustration schematically showing another example of a seat belt retractor provided with a conventional torsion bar.

Fig. 12 is a graph showing characteristics of FL load of the conventional example shown in Fig. 11.

### Best Modes for carrying out the Invention

Hereinafter, best modes for carrying out the present invention will be described with reference to the attached drawings.

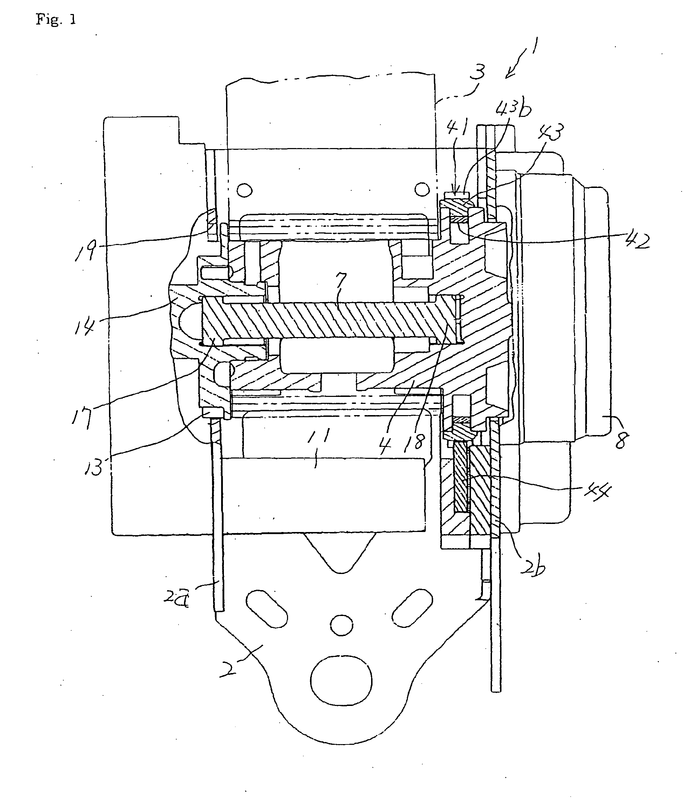

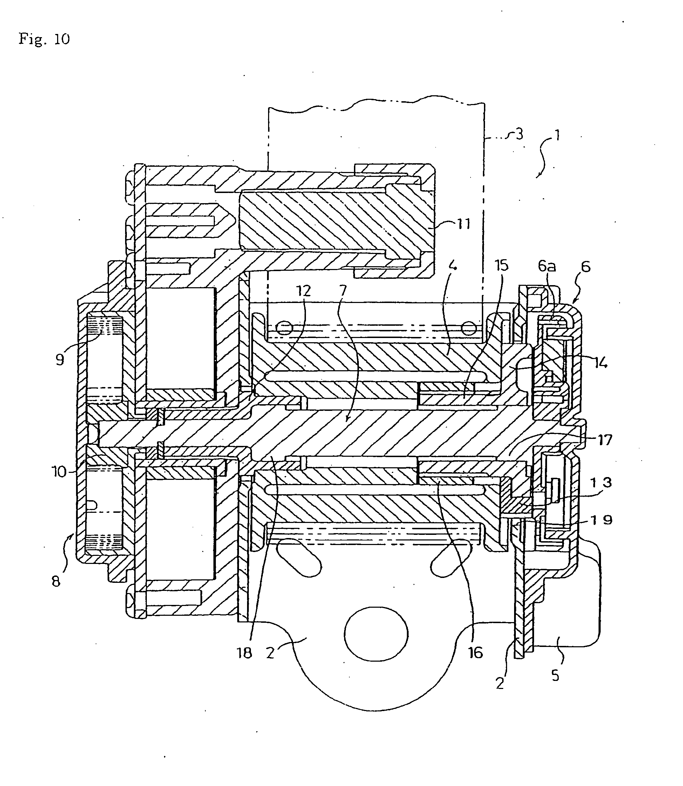

Fig. 1 is an illustration schematically showing an embodiment of a seat belt retractor according to the present invention in which some components are omitted. It should be noted that the same components of a seat belt retractor 1 of a prior example or the aforementioned conventional seat belt retractor 1 shown in Fig. 10 will be marked with the same numerals so as to omit the detail description.

As shown in Fig. 1, the seat belt retractor 1 of this embodiment comprises, similarly to the conventional seat belt retractor 1 shown in Fig. 10, a U-like frame 2, a seat belt 3, a spool 4 for winding up the seat belt 3, a torsion bar (first EA mechanism; corresponding to the first seat belt load limiting mechanism of the present invention) 7, a pawl 13, a locking base 14, and internal teeth 19 formed in a side wall 2a of the frame 2. The seat belt retractor 1 also comprises, similarly to the conventional seat belt retractor 1 shown in Fig. 10, a deceleration sensing means 5, a locking means 6, a spring means 8, and a pretensioner 11, but not shown in detail. In this case, the deceleration sensing means 5, the locking means 6, and the spring means 8 are disposed in a mirror image relative to the case of the seat belt retractor 1 shown in Fig. 10, respectively.

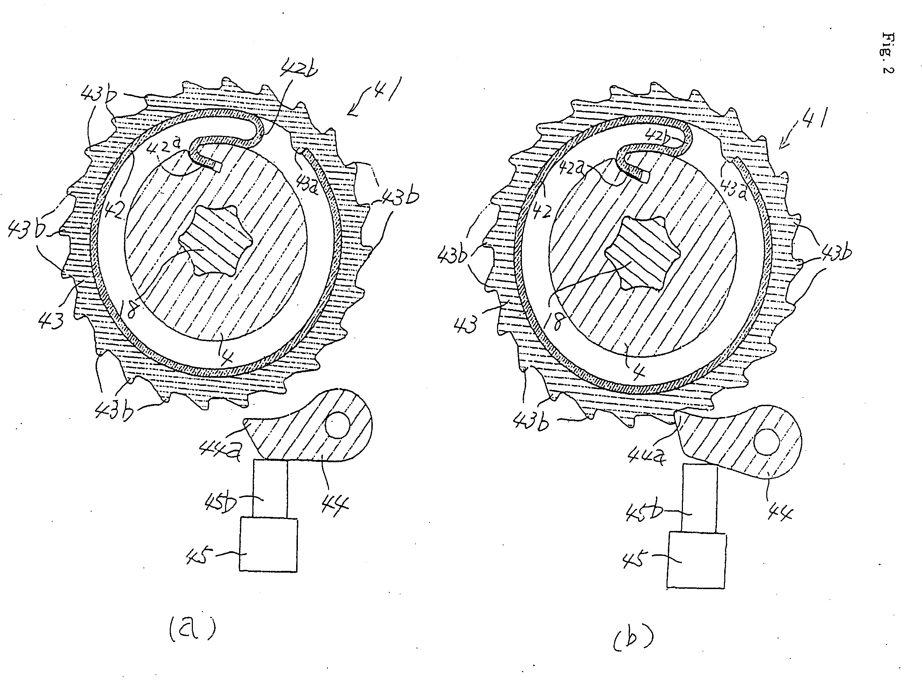

The seat belt retractor 1 of this embodiment is provided with a second EA mechanism (corresponding to the second seat belt load limiting mechanism of the present invention) 41 which is disposed at an end of the spool 4 at a side opposite to the locking base 14 (the right side in Fig. 1) and is formed integrally and coaxially with the spool 4. As shown in Figs. 2(a) and 2(b), the second EA mechanism 41 has an energy absorbing plate 42 as an energy absorber and a ring-like energy absorber supporting member 43 which is disposed on the outer periphery of a right end portion of the spool 4 and which normally rotates together with the spool 4 and allows the relative rotation of the spool 4 in the seat belt withdrawing direction when being locked from rotating in the sea belt withdrawing direction.

The energy absorbing plate 42 is composed of a band-like flat plate having a predetermined thickness and a predetermined width and having elasticity and is substantially C- shaped as a whole. Alternatively, the energy absorbing plate 42 may be composed of a wire member. One end of the energy absorbing plate 42 defines a first supporting portion 42a which is securely supported by the spool 4 and the other end of the energy absorbing plate 42 can come in contact with an energy absorber supporting portion 43a projecting from the inner surface of the ring-like energy absorber supporting member 43 in the seat belt withdrawing direction. Furthermore, a portion of the energy absorbing plate 42 adjacent to the first support portion 42a is folded back so as to define a U-shaped portion 42b. A section extending from the U-shaped portion 42b to the other end of the energy absorbing plate 42 are normally in contact with the inner surface of the energy absorber supporting member 43.

The ring-like energy absorber supporting member 43 is formed in an annular disk shape and has a predetermined number of ratchet teeth 43b formed in the outer periphery thereof.

As shown in Fig. 1, a lever 44 as an operation control member for controlling the EA operation of the second EA mechanism 41 is pivotally supported on a side wall 2b of the frame 2. The lever 44 is provided at its end with an engaging claw 44a capable of engaging the ratchet teeth 43b of the energy absorber supporting member 43.

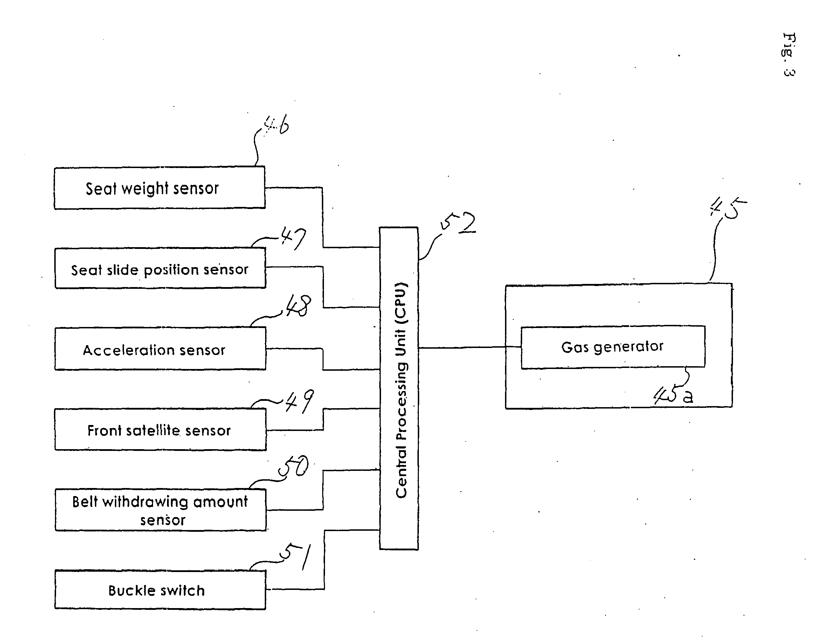

Furthermore, the side wall 2b of the frame 2 is provided with a driving member 45. The driving member 45 defines a second limited load setting means of the present invention. The driving member 45 comprises a gas generator 45a (not shown in Figs. 2(a), 2(b), but shown in Fig. 3) inside thereof. The gas generator 45a is activated to generate reaction gas in the event of an emergency. During the normal operation, the driving member 45 keeps a driving rod 45b thereof in its retracted state so as to set the lever 44 in its non-operational position as shown in Fig. 2(a). When the lever 44 is in its non-operational position, the engaging claw 44a of the lever 44 is not allowed to engage the ratchet teeth 43b. In the event of an emergency, the driving rod 45b of the driving member 45 is projected by the reaction gas generated from the gas generator 45a to pivot the lever 44 in the clockwise direction in Fig. 2(a) so as to set the lever 44 in its operational position where the engaging claw 44a is allowed to engage the ratchet teeth 43b as shown in Fig. 2(b).

As shown in Fig. 3, in the second EA mechanism 41 of this embodiment, the operation of the gas generator 45a of the driving member 45 is controlled by a CPU 52 according to the emergency situation based on signals outputted from a seat weight sensor 46 for detecting an occupant's weight, a seat slide position sensor 47, an acceleration sensor 48 for detecting deceleration of the vehicle, a front satellite sensor 49 for detecting an object in front of the vehicle, a belt withdrawing amount sensor 50, and a buckle switch 51.

Hereinafter, the operation of the seat belt retractor 1 of this embodiment having the aforementioned structure will be described. Since actions of the seat belt retractor of this embodiment by the same components as the conventional seat belt retractor 1 shown in Fig. 10 are the same as the conventional seat belt retractor 1, the description about the actions will be omitted and only actions by the own components of the seat belt retractor 1 of this embodiment will be described.

In the event of an emergency, the pawl 13 pivots and thus engages the internal teeth 19 of the frame 2 so as to lock the locking base 14 from rotating in the belt withdrawing direction. Thus, the torsion bar 7 is twisted and deformed so that the energy applied to the occupant is absorbed by the torsion bar 7 similarly to the conventional one.

When the CPU 52 judges the emergency situation based on the signals outputted from the respective sensors 46, 47, 48, 49, 50 and the buckle switch 51 and decides that the absorption of the energy applied to the occupant by the second EA mechanism 41 is also required, that is, that a predetermined condition for actuating the second EA mechanism is satisfied such as when the occupant has a relatively heavy weight or when such a severe collision as to activate the pretensioner and the airbag occurs, the CPU 52 activates the gas generator 45a of the driving member 45. Then, the gas generator 45a generates reaction gas so that the driving member 45 is driven by this reaction gas so as to pivot the lever 44 in the clockwise direction as shown in Fig. 2(b). Therefore, the engaging claw 44a of the lever 44 becomes in the position capable of engaging the ratchet teeth 43b.

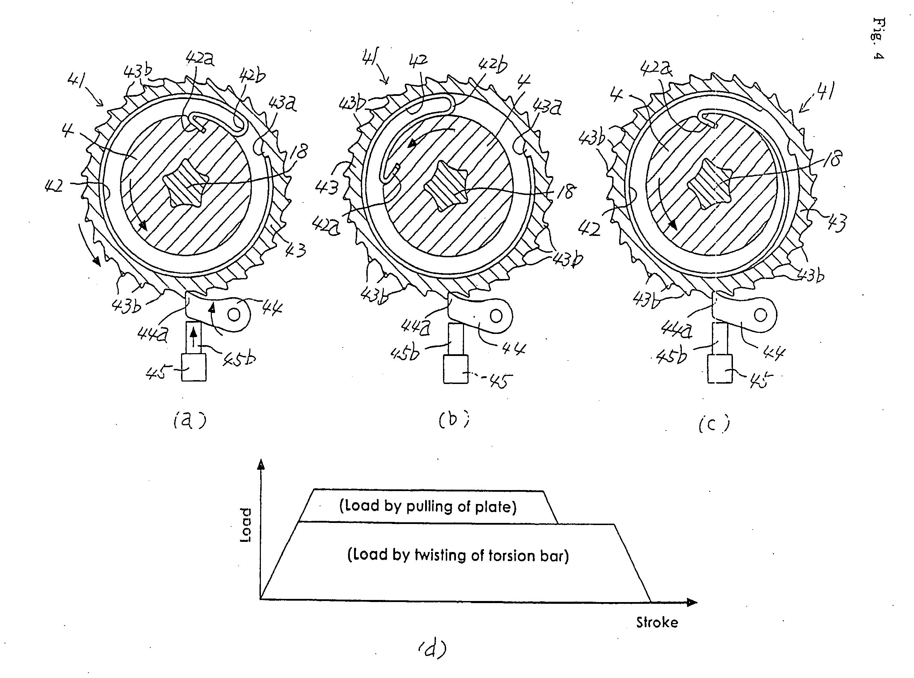

According to the rotation of the spool 4 in the seat belt withdrawing direction due to the inertia of the occupant, the energy absorber supporting member 43 rotates together with the spool 4 as shown in Fig. 4(a). However, since one of the ratchet teeth 43b is engaged with the engaging claw 44a of the lever 44, the rotation of the energy absorber supporting member 43 is stopped so that the spool 4 rotates in the seat belt withdrawing direction relative to the energy absorber supporting member 43.

Then, the energy absorbing plate 42 is deformed in such a manner that the U-shaped portion 42b gradually moves toward the other end side as shown in Fig. 4(b). Accordingly, the energy applied to the occupant is absorbed by the second EA mechanism 41. In this manner, as shown in Fig. 4(d), the energy applied to the occupant is effectively absorbed by both actions of the torsion bar 7 and the second EA mechanism 41.

As the energy absorbing plate 42 is completely reversed so that the energy absorption by the energy absorbing plate 42 is finished shown in Fig. 4(c), the energy applied to the occupant is effectively absorbed solely by the torsion bar 7 as shown in Fig. 4(d).

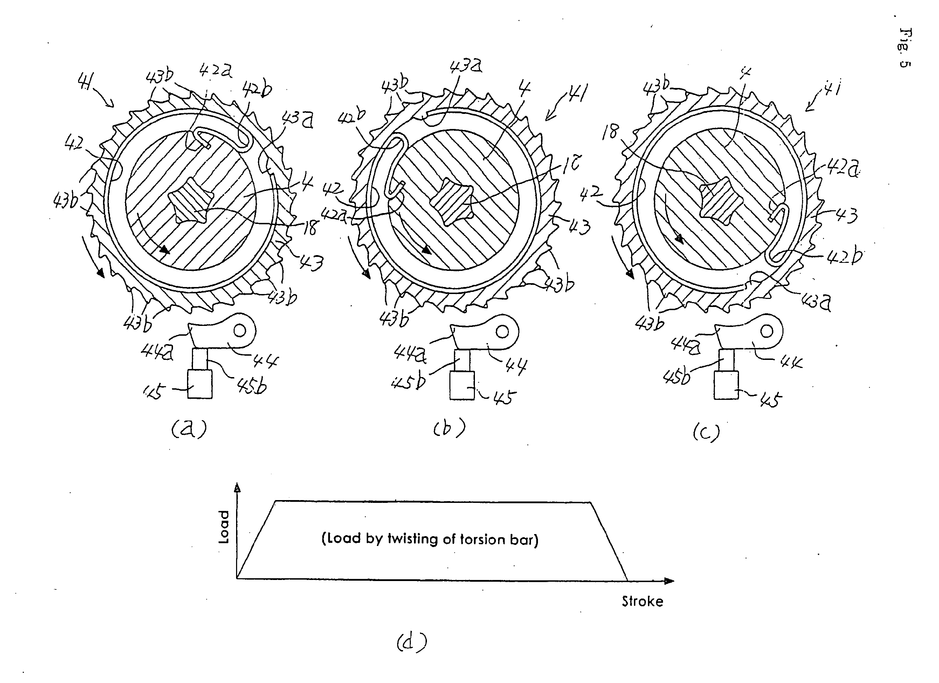

When the CPU 52 judges the emergency situation based on the signals outputted from the respective sensors 46, 47, 48, 49, 50 and the buckle switch 51 and decides that the absorption of the energy applied to the occupant by the second EA mechanism 41 is not required, that is, that a predetermined condition for actuating the second EA mechanism is not satisfied such as when the occupant has a relatively light weight or when such a mild collision that the pretensioner or the airbag is not activated occurs, the CPU 52 does not activate the gas generator 45a of the driving member 45. Since the piston rod 45d of the driving member 45 does not project, the lever 44 does not pivot and is held in its non-operational position as shown in Fig. 5(a). Therefore, according to the rotation of the spool 4 in the seat belt withdrawing direction due to the inertia of the occupant, the energy absorber supporting member 43 also rotates together with the spool 4 in the seat belt withdrawing direction. Since the engaging claw 44a of the lever 44 does not engages the ratchet teeth 43b in this case, the energy absorber supporting member 43 freely rotates together with the spool 4 in the seat belt withdrawing direction.

As shown in Figs. 5(b) and 5(c), even when the energy absorber supporting member 43 further rotates in the seat belt withdrawing direction, the relative position in the rotating direction between the spool 4 and the energy absorber supporting member 43 does not vary so that the U-shaped portion 42b does not move toward the other end side. That is, the energy absorbing plate 42 does not deform or holds its initial state. Therefore, as shown in Fig. 5(d), the energy absorption by the energy absorbing plate 42 is not conducted so that the energy applied to the occupant is absorbed solely by the torsion bar 7. In this manner, the limited load of the seat belt 3 is set to be small when, based on the signals outputted from the respective sensors 46, 47, 48, 49, and 50, it is determined that the energy absorption by the second EA mechanism 41 is not required such as when such a mild collision that the pretensioner 11 and the airbag is not activated (for example, a mild collision of a vehicle running at a speed of 30 km/hour or less) occurs.

Consequently, the load limitation by the second EA mechanism is selected. That is, there are a case that the load limitation is conducted in the event of an emergency and a case that the load limitation is not conducted in the event of an emergency.

According to the seat belt retractor 1 of this embodiment, the limited load of the seat belt in the event of an emergency is changed based on, for example, preliminary information (such as the weight of an occupant and the position of a seat in the anteroposterior direction), collision-predicting information for predicting a collision, and information indicating the degree of the collision (such as the collision speed, the acceleration and deceleration during the collision, and the type of collision). Thus, the limited load of the seat belt during a collision can be set more flexibly and variously in accordance with the conditions under the collision and the information in the emergency situation, such as the physical size of the occupant. Accordingly, the occupant can be more effectively and suitably restrained during a collision.

Furthermore, since the second EA mechanism 41 is disposed integrally and coaxially with the spool 4, the seat belt retractor 1 can be made compact in size in the vertical direction. Thus, the usable space inside the vehicle cabin can be increased.

Though, in the aforementioned prior invention (Japanese patent application No. 2005-127943), the clutch mechanism which does not transmit the rotation of the spool to the second EA mechanism 41 in the normal state is required because the energy absorber supporting member is normally prevented from rotating and the second EA mechanism 41 is normally allowed to operate, the energy absorber supporting member 43 is normally allowed to rotate and the second EA mechanism 41 is not allowed to operate so that no clutch mechanism is required in the seat belt retractor according to this embodiment. Therefore, the number of parts is reduced and the second EA mechanism 41 is achieved with a simple structure.

Further, in the aforementioned prior invention (Japanese patent application No. 2005-127943), the second EA mechanism 41 is adapted to operate via the clutch mechanism only when the pawl 13 of the locking means 6 engages the internal teeth 19 of the frame 2 to lock the locking base 14 from rotating. This means that the start of operation of the second EA mechanism 41 is subject to the locking of the locking base 14 from rotating and the independent operation of the second EA mechanism 41 is not allowed. In the seat belt retractor 1 of this embodiment, however, the start of the second EA mechanism is not subject to the locking of the locking base 14 and the independent operation of the second EA mechanism 41 is allowed.

The other components and the other works and effects of the seat belt retractor 1 of this embodiment are the same as those of the aforementioned seat belt retractor 1 as shown in Fig. 10.

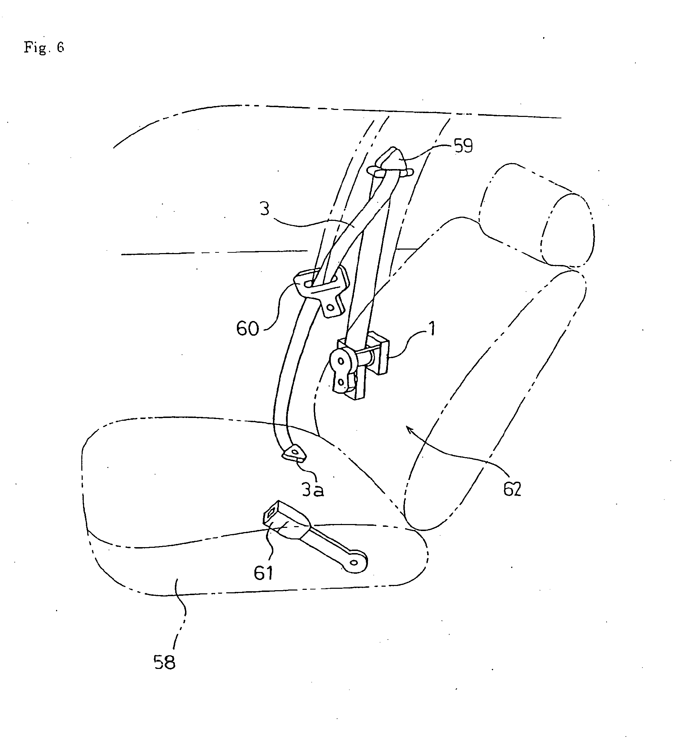

The seat belt retractor 1 of the aforementioned embodiment can be applied to a seat belt retractor 1 used in a conventionally known seat belt apparatus. As examples of the seat belt apparatus to which the seat belt retractor 1 of the aforementioned embodiment can be applied, there is a seat belt apparatus 62 as shown in Fig. 6 comprising: a seat belt retractor 1 fixed to a vehicle body; a seat belt 3 which is withdrawn from the seat belt retractor 1 and is provided at its end with a belt anchor 3a fixed to the floor of the vehicle body or a vehicle seat 58; a deflection fitting 59 for guiding the seat belt 3 withdrawn from the seat belt retractor 1 toward a vehicle occupant's shoulder; a tongue 60 which is slidably supported by the seat belt 3 guided by the deflection fitting 59; and a buckle 61 which is fixed to the floor of the vehicle body or to the vehicle seat and to which the tongue 60 is detachably inserted and latched.

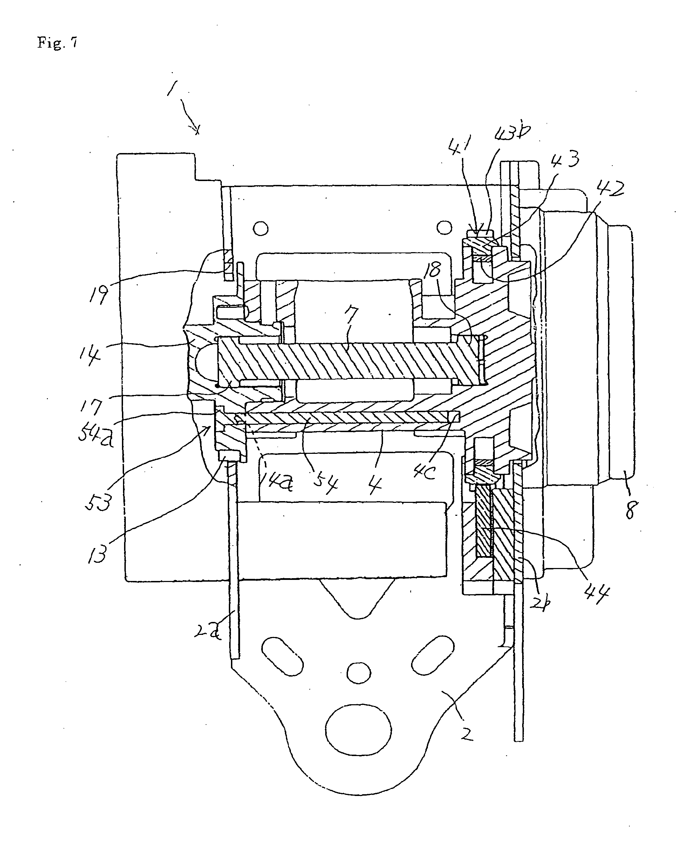

Fig. 7 is a sectional view similar to Fig. 1, showing another embodiment of the seat belt retractor according to the present invention.

As shown in Fig. 7, the seat belt retractor 1 of this embodiment further comprises a third EA mechanism (corresponding to the third seat belt load limiting mechanism of the present invention) 53 between the spool 4 and the locking base 14 in addition to the components of the seat retractor 1 of the aforementioned embodiment. The third EA mechanism 53 comprises an elongated energy absorbing pin 54 which is a third energy absorber extending in the axial direction of the spool 4. The energy absorbing pin 54 is slidably inserted through an elongated axial hole 4c formed in the spool 4 at a decentered position to extend in the axial direction and penetrates the locking base 14. The energy absorbing pin 54 penetrating the locking base is provided at its end with flange 54a. The flange 54a is fitted to the locking base 14, thereby preventing the energy absorbing pin 54 from coming off toward the spool 4.

The locking base 14 has a guide groove 14a formed in its side facing the spool 4 for guiding the energy absorbing pin 54 to the position for allowing the penetration of the energy absorbing pin 54. The guide groove 14a is formed into an arc shape coaxial to the axis of the locking base 14, but not shown in the drawing. The length of the arc shape is set to such a length as to completely accommodate the energy absorbing pin 54 after energy absorption of the energy absorbing pin 54. In the normal state before the energy absorption of the energy absorbing pin 54, the energy absorbing pin 54 is kept to be linear.

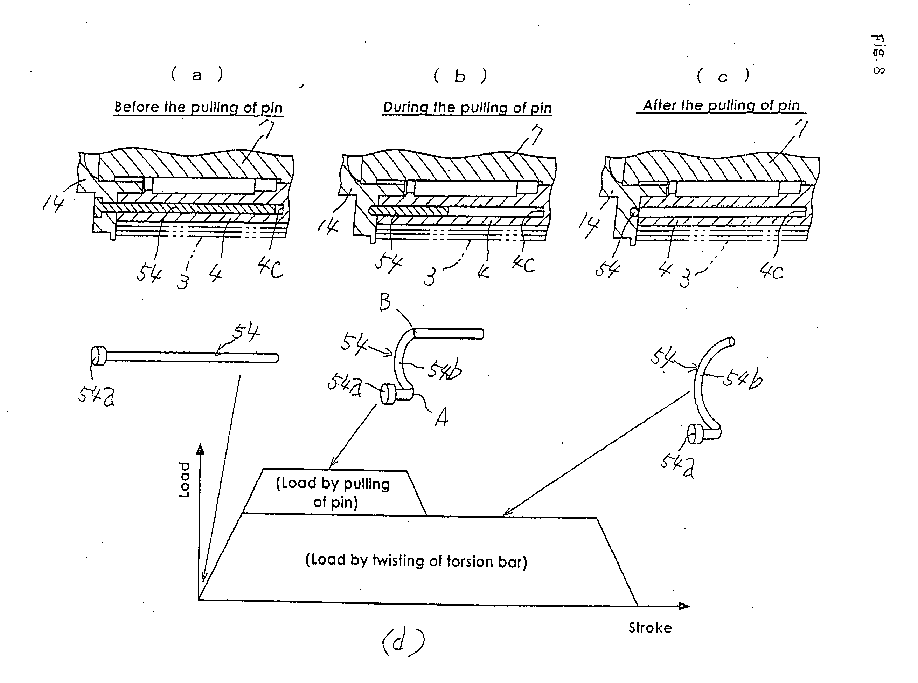

In the third EA mechanism, as shown in Fig. 8(a), the energy absorbing pin 54 is not allowed to be pulled from the axial hole 4c of the spool 4 and is kept to be linear in the normal state before the pulling of the pin. Since the locking base 14 is prevented from rotating in the seat belt withdrawing direction in the event of an emergency as mentioned above, the torsion bar 7 is twisted and only the spool 4 rotates relative to the locking base 14 in the seat belt withdrawing direction. Then, the pulling of the energy absorbing pin 54 from the axial hole 4c of the spool 4 is started. As shown in Fig. 8(b), the energy absorbing pin 54 is orthogonally bent at a point A and a point B while being pulled from the axial hole 4c and the pulled energy absorbing pin 54b is guided by the guide groove 14a of the locking base 14 so that it is deformed to be curved in the arc shape while the energy absorbing pin 54 is pulled from the axial hole 4c.

Thus, as shown in Fig. 8(d), limited load is generated as a load applied to the seat belt by the pulling resistance of the energy absorbing pin 54 from the axial hole 4c, the deformation by bending of the energy absorbing pin 54, and the deformation by curving of the energy absorbing pin 54. Though the load gradually increases, the load in the middle of pulling after the energy absorbing pin 54 is pulled by a predetermined amount is kept constant as shown in Fig. 8(b). When the energy absorption by the second EA mechanism 41 is not conducted, the limited load is a sum of the load by torsional deformation of the torsion bar 7 and the load by the pulling of the energy absorbing pin 54 as shown in Fig. 8(d).

As shown in Fig. 8(c), as the energy absorbing pin 54 is pulled entirely, no load is generated by the pulling of the energy absorbing pin 54 so that only load is generated by the torsional deformation of the torsion bar 7. As mentioned above, the load limiting operation by the third EA mechanism 53 is adapted to be conducted always in the event of an emergency, i.e. it is not alternative.

Hereinafter, the operation of the seat belt retractor 1 of this embodiment having the aforementioned structure will be described.

As the spool 4 and the locking base 14 rotate in the belt withdrawing direction due to the inertia of the occupant in the event of an emergency as mentioned above, the pawl 13 pivots and thus engages the internal teeth 19 of the frame 2 so as to lock the locking base 14 from rotating in the belt withdrawing direction. Thus, the torsion bar 7 is twisted and deformed so that the energy applied to the occupant is absorbed by the torsion bar 7 similarly to the conventional one. At the same time, the energy absorbing pin 54 of the third EA mechanism 53 is deformed to be bent at a right angle and deformed to be curved in an arc shape. Accordingly, energy is absorbed by the third EA mechanism 53.

Similarly to the aforementioned embodiment of the present invention, when the CPU 52 decides that the absorption of the energy applied to the occupant by the second EA mechanism 41 is also required in view of the emergency situation, the CPU 52 activates the gas generator 45a of the driving member 45. Then, the lever 44 is pivoted to its operational position where the engaging claw 44a engages the ratchet teeth 43b of the energy absorber supporting member 43. Therefore, the rotation of the energy absorber supporting member 43 is stopped and only the spool 4 rotates in the seat belt withdrawing direction, thereby conducting energy absorption of the second EA mechanism 41 similarly to the aforementioned embodiment.

In this manner, the energy is effectively absorbed by all of the operation of the torsion bar 7, the operation of the second EA mechanism 41, and the operation of the third EA mechanism 53. The limited load applied to the seat belt 3 is the sum of the load by torsional deformation of the torsion bar 7, the load by deformation of the energy absorbing plate 42, and the load by the pulling of the energy absorbing pin 54. That is, the limited load applied to the seat belt 3 is increased by the torsion bar 7, the second and third EA mechanisms 41, 53.

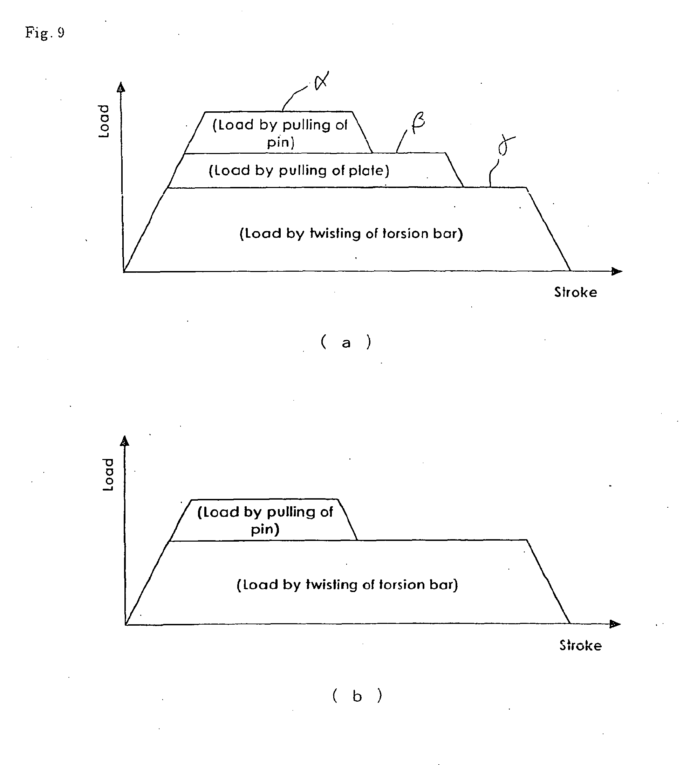

As the entire length of the energy absorbing pin 54 is pulled as shown in Fig. 8(c), the energy absorption by the third EA mechanism 53 is finished so that the load becomes to the sum of the load by the torsional deformation of the torsion bar 7 and the load by the deformation of the energy absorbing plate 42 as shown by β in Fig. 9(a). Therefore, the energy is effectively absorbed by both the torsion bar 7 and the second EA mechanism 41 so as to change the limited load of the seat belt 3. As further the energy absorption by the second EA mechanism 41 is finished, the limited load becomes the load solely by the torsional deformation of the torsion bar 7 as shown by γ in Fig. 9(a). Therefore, the energy applied to the occupant is effectively absorbed solely by the torsion bar 7 so as to change the limited load of the seat belt 3. In this case, the limited load of the seat belt 3 is set in three stages.

Similarly to the aforementioned embodiment of the present invention, when the CPU 52 decides that the absorption of the energy applied to the occupant by the second EA mechanism 41 is not required in view of the emergency situation, the CPU 52 does not activates the gas generator 45a of the driving member 45 similarly to the aforementioned embodiment of the present invention. Accordingly, the lever 44 does not pivot and is held in its non-operational position so that the engaging claw 44a does not engages the ratchet teeth 43b of the energy absorber supporting member 43 in this case. Therefore, the energy absorber supporting member 43 rotates together with the spool 4 so that the energy absorption by the second EA mechanism 41 is not conducted similarly to the aforementioned embodiment.

In this manner, the energy is absorbed by the respective operations of the torsion bar 7 and the third EA mechanism 53. The limited load applied to the seat belt 3 is the sum of the load by torsional deformation of the torsion bar 7 and the load by the pulling of the energy absorbing pin 54 as shown in Fig. 9(b). That is, the limited load applied to the seat belt 3 is increased by the torsion bar 7 and the third EA mechanism 53.

As the entire length of the energy absorbing pin 54 is pulled as shown in Fig. 8(c), the energy absorption by the third EA mechanism 53 is finished so that the load becomes to the load solely by the torsional deformation of the torsion bar 7 as shown in Fig. 9(b). Therefore, the energy is effectively absorbed solely by the torsion bar 7 so as to change the limited load of the seat belt 3. In this case, the limited load of the seat belt 3 is set in two stages.

According to the seat belt retractor 1 of this embodiment, the limited load of the seat belt in the event of an emergency can be set effectively by combining the second EA mechanism 41 of which load limit is alternative with the first EA mechanism and the third EA mechanism 53 of which load limits are alternative. This enables further effective and suitable restraint of the occupant during a collision.

When the rotation of the locking base 14 in the seat belt withdrawing direction is stopped so that the spool 4 rotates relative to the locking base 14 in the seat belt withdrawing direction, the load applied to the seat belt 3 is first limited by the torsion bar 7 and the third EA mechanism 53 or the load applied to the seat belt 3 is first limited by the torsion bar 7 and the second and third EA mechanisms 41, 53. Then, at least finally the load applied to the seat belt 3 is limited solely by the torsion bar 7. Therefore, when the rotation of the locking base 14 in the seat belt withdrawing direction is stopped so that the spool 4 rotates relative to the locking base 14 in the seat belt withdrawing direction, the load applied to the seat belt 3 can be first substantially limited by the combination of the torsion bar 7 and the third EA mechanism 53 or the combination of the torsion bar 7, the second and third EA mechanisms 41, 53 and then finally limited solely by the torsion bar 7.

The energy applied to the occupant in the event of an emergency (normally, called "chest G") is first small because the energy applied only by the seat belt 3 and is gradually increased after the airbag comes in contact with the occupant because the energy applied by the airbag is added. Conventionally, there has been a problem the uniform energy absorption is impossible. However, according to the effective load limitation by EA mechanisms as mentioned above, the energy applied to the occupant can be absorbed uniformly and efficiently for any of occupants having various physical sizes by limiting the load of the seat belt 3 even though the airbag is activated in the event of an emergency so that the energy of the airbag is added.

Since the third EA mechanism 53 is composed of the elongated energy absorbing pin 54 inserted into the axial hole 4c of the spool 4, the third EA mechanism 53 can be formed by a simple structure and a more compact seat belt retractor 1 can be achieved.

The other components and the other works and effects of the seat belt retractor 1 of this embodiment are the same as those of the seat belt retractor 1 of the aforementioned embodiment of the present invention and the conventional seat belt retractor 1 shown in Fig. 10.

Though the gas generator 45a is used as the driving member 45 for moving the lever 44 as the operation control member in the aforementioned embodiments, the present invention is not limited thereto. For example, the lever 44 may be moved by electromagnetic force of an electromagnetic solenoid or driving force of other driving means as the driving member 45. In this case, the operation of the electromagnetic solenoid is controlled by the CPU 52 similarly to the aforementioned embodiments.

Though the energy absorbing pin 54 is used as the third EA mechanism 53 and the load applied to the seat belt 3 is limited by the pulling of the energy absorbing pin 54 in the aforementioned embodiment, the third EA mechanism 53 may be an EA mechanism using an energy absorbing plate similar to the second EA mechanism 41 having the energy absorbing plate 42. In this case, since the length of the energy absorbing plate can be formed longer than that of the energy absorbing pin 54 (the length of the energy absorbing pin 54 should be shorter than the axial length of the spool 4), the stroke for rotation of the spool 4 corresponding to the setting the limited load by the energy absorbing plate can be set longer. However, for achieving a simple and compact structure of the seat belt retractor including the respective EA mechanisms, it is preferable to use the energy absorbing pin 54 as the third EA mechanism 53.

### Industrial Applicability

The seat belt retractor of the present invention are suitably used as a seat belt retractor which is used in a seat belt apparatus installed in a vehicle such as an automobile and prevents a seat belt from being withdrawn while absorbing and reducing energy applied to an occupant by limiting load applied to the seat belt in the event of an emergency such as a vehicle collision.

## Claims

1. A seat belt retractor comprising
a spool (4) for winding up a seat belt (3),
a locking means (6) having a locking member (14) to which the rotation of said spool (4) is normally transmitted via a first seat belt load limiting mechanism (7) so that the locking member (14) rotates together with the spool (4) and which is prevented from rotating in the seat belt withdrawing direction in the event of an emergency, wherein when said locking member (14) is prevented from rotating in the seat belt withdrawing direction so that said spool (4) rotates relative to said locking member (14) in the seat belt withdrawing direction, the load applied to said seat belt (3) is limited by said first seat belt load limiting mechanism (7),
a second seat belt load limiting mechanism (41) provided coaxially with said spool (4) for changing the limited load of the seat belt (3) in the event of an emergency according to information in the emergency situation such as the physical size of an occupant, the position of a seat in the anteroposterior direction, the collision speed, the collision acceleration, and the type of collision, and
a control unit (52) which sets said second seat belt load limiting mechanism (41) to the non-operational state normally and when a predetermined condition is not satisfied even in the event of an emergency and sets said second seat belt load limiting mechanism (41) to the operational state when the predetermined condition is satisfied in the event of an emergency,
**characterized in that**
said second seat belt load limiting mechanism (41) comprises an energy absorber supporting member (43) which is arranged coaxially with said spool (4) and is rotatable relative to said spool (4), and an energy absorber (42) including an elongated band-like energy absorbing plate which is disposed between said spool (4) and said energy absorber supporting member (43) and absorbs energy when said energy absorber supporting member (43) rotates relative to said spool (4), and
said control unit (52) sets said energy absorber supporting member (43) to be allowed to rotate together with said spool (4) normally and when the predetermined condition is not satisfied even in the event of an emergency and sets said energy absorber supporting member (43) to be allowed to rotate relative to said spool (4) when the predetermined condition is satisfied in the event of an emergency.

2. A seat belt retractor as claimed in claim 1, further comprising a third seat belt load limiting mechanism (53) for limiting load applied to said seat belt (3) in the event of an emergency, wherein said third seat belt load limiting mechanism (53) is disposed between said spool (4) and said locking member (14).

3. A seat belt retractor as claimed in claim 2, wherein when said locking member (14) is prevented from rotating in the seat belt withdrawing direction so that said spool (4) rotates relative to said locking member (14) in the seat belt withdrawing direction, the load applied to said seat belt (3) is first limited by the first and third seat belt load limiting mechanisms (7, 53) or the load applied to said seat belt (3) is first limited by the first through third seat belt load limiting mechanisms (7, 41, 53) and the load applied to said seat belt (3) is at least finally limited solely by the first seat belt load limiting mechanism (7).

4. A seat belt retractor as claimed in claim 2 or 3, wherein said third seat belt load limiting mechanism (53) comprises an energy absorbing pin (54) which is slidably inserted to an elongated axial hole (4c) formed in said spool (4) and penetrates said locking member (14), wherein when said spool (4) rotates relative to said locking member (14) in the seat belt withdrawing direction, the load applied to said seat belt (3) is limited by the pulling load when said energy absorbing pin (54) is pulled from the axial hole (4c) of said spool (4).

5. A seat belt retractor as claimed in any one of claims 1 through 4, wherein said first seat belt load limiting mechanism includes a torsion bar (7) disposed between said spool (4) and said locking member (14).

6. A seat belt apparatus comprising at least: a seat belt retractor (1) which winds up a seat belt (3); a tongue slidably supported by said seat belt (3) withdrawn from the seat belt retractor (1); and a buckle to which said tongue can be detachably latched, wherein the withdrawing of said seat belt (3) is prevented by the seat belt retractor (1) in the event of an emergency, thereby restraining an occupant,
wherein said seat belt retractor is a seat belt retractor (1) as claimed in any one of claims 1 through 5.

## Patentansprüche

1. Sitzgurt-Aufrollvorrichtung umfassend
eine Spule (4) zum Aufwickeln eines Sitzgurtes (3),
ein Verriegelungsmittel (6) mit einem Verriegelungsteil (14), auf welches die Drehung der Spule (4) normalerweise über einen ersten Sitzgurt-Belastungsbegrenzungsmechanismus (7) übertragen wird, so dass sich das Verriegelungsteil (14) zusammen mit der Spule (4) dreht, und welches bei einem Notfall daran gehindert ist, sich in die den Sitzgurt abwickelnden Richtung zu drehen,
wobei, wenn das Verriegelungsteil (14) daran gehindert ist, sich in der den Sitzgurt abwickelnden Richtung zu drehen, so dass sich die Spule (4) relativ zu dem Verriegelungsteil (14) in der den Sitzgurt abwickelnden Richtung dreht, die Last, welche auf den Sitzgurt (3) aufgebracht wird, durch den ersten Sitzgurt-Belastungsbegrenzungsmechanismus (7) begrenzt ist,
einen zweiten Sitzgurt-Belastungsbegrenzungsmechanismus (41), welcher koaxial mit der Spule (4) vorhanden ist, um die begrenzte Belastung des Sitzgurtes (3) in dem Notfall gemäß einer Information bei dem Notfall, wie beispielsweise der physikalischen Größe eines Insassen, der Position eines Sitzes in der Vorwärts-Rückwärts-Richtung, der Kollisionsgeschwindigkeit, der Kollisionsbeschleunigung und des Typs der Kollision, zu verändern, und
eine Steuereinheit (52), welche den zweiten Sitzgurt-Belastungsbegrenzungsmechanismus (41) normalerweise in den Nicht-Betriebszustand versetzt, wenn auch in dem Notfall eine vorbestimmte Bedingung nicht erfüllt ist, und den zweiten Sitzgurt-Belastungsbegrenzungsmechanismus (41) in den Betriebszustand versetzt, wenn die vorbestimmte Bedingung in dem Notfall erfüllt ist,
**dadurch gekennzeichnet,**
**dass** der zweite Sitzgurt-Belastungsbegrenzungsmechanismus (41) ein ein Energieabsorptionsmittel tragendes Teil (43), welches koaxial mit der Spule (4) angeordnet ist und relativ zu der Spule (4) drehbar ist, und ein Energieabsorptionsmittel (42), welches eine längliche einem Band ähnliche Energie absorbierende Platte, welche zwischen der Spule (4) und dem ein Energieabsorptionsmittel tragenden Teil (43) angeordnet ist und eine Energie absorbiert, wenn sich das ein Energieabsorptionsmittel tragende Teil (43) relativ zu der Spule (4) dreht, umfasst, und
**dass** die Steuereinheit (52) das ein Energieabsorptionsmittel tragende Teil (43) derart einstellt, dass es zusammen mit der Spule (4) normalerweise, wenn die vorbestimmte Bedingung sogar in dem Notfall nicht erfüllt ist, drehbar ist, und dass sie das ein Energieabsorptionsmittel tragende Teil (43) derart einstellt, dass es relativ zu der Spule (4) drehbar ist, wenn die vorbestimmte Bedingung in dem Notfall erfüllt ist.

2. Sitzgurt-Aufrollvorrichtung nach Anspruch 1, **dadurch gekennzeichnet, dass** sie darüber hinaus einen dritten Sitzgurt-Belastungsbegrenzungsmechanismus (53) umfasst, um eine Last, welche auf den Sitzgurt (3) in dem Notfall aufgebracht wird, zu begrenzen, wobei der dritte Sitzgurt-Belastungsbegrenzungsmechanismus (53) zwischen der Spule (4) und dem Verriegelungsteil (14) angeordnet ist.

3. Sitzgurt-Aufrollvorrichtung nach Anspruch 2, **dadurch gekennzeichnet, dass**, wenn das Verriegelungsteil (14) daran gehindert ist, sich in der den Sitzgurt abwickelnden Richtung zu drehen, so dass sich die Spule (4) relativ zu dem Verriegelungsteil (14) in der den Sitzgurt abwickelnden Richtung dreht, die Last, welche auf den Sitzgurt (3) aufgebracht wird, zuerst durch den ersten und den dritten Sitzgurt-Belastungsbegrenzungsmechanismus (7, 53) begrenzt ist oder die Last, welche auf den Sitzgurt (3) aufgebracht wird, zuerst durch den ersten bis dritten Sitzgurt-Belastungsbegrenzungsmechanismus (7, 41, 53) begrenzt ist und die Last, welche auf den Sitzgurt (3) aufgebracht wird, zumindest schließlich allein durch den ersten Sitzgurt-Belastungsbegrenzungsmechanismus (7) begrenzt ist.

4. Sitzgurt-Aufrollvorrichtung nach Anspruch 2 oder 3, **dadurch gekennzeichnet, dass** der dritte Sitzgurt-Belastungsbegrenzungsmechanismus (53) einen eine Energie absorbierenden Stift (54) umfasst, welcher gleitend in ein längliches axiales Loch, (4c), welches in der Spule (4) ausgebildet ist, eingefügt ist und das Verriegelungsteil (14) durchdringt, wobei, wenn sich die Spule (4) relativ zu dem Verriegelungsteil (14) in der den Sitzgurt abwickelnden Richtung dreht, die Last, welche auf den Sitzgurt (3) aufgebracht wird, durch die Zuglast begrenzt ist, wenn der eine Energie absorbierende Stift (54) aus dem axialen Loch (4c) der Spule (4) gezogen wird.

5. Sitzgurt-Aufrollvorrichtung nach einem der Ansprüche 1 bis 4, **dadurch gekennzeichnet, dass** der erste Sitzgurt-Belastungsbegrenzungsmechanismus einen Torsionsstab (7) umfasst, welcher zwischen der Spule (4) und dem Verriegelungsteil (14) angeordnet ist.

6. Sitzgurtvorrichtung, welche zumindest umfasst: eine Sitzgurt-Aufrollvorrichtung (1), welche einen Sitzgurt (3) aufwickelt; eine Zunge, welche gleitend von dem Sitzgurt (3) gehalten wird, welcher von der Sitzgurt-Aufrollvorrichtung (1) abgewickelt ist; und ein Gurtschloss, mit welchem die Zunge lösbar verriegelt werden kann, wobei das Abwickeln des Sitzgurtes (3) durch die Sitzgurt-Aufrollvorrichtung (1) in dem Notfall verhindert wird, wodurch ein Insasse zurückgehalten wird,
wobei die Sitzgurt-Aufrollvorrichtung eine Sitzgurt-Aufrollvorrichtung (1) nach einem der Ansprüche 1 bis 5 ist.

## Revendications

1. Rétracteur de ceinture de sécurité comprenant :
une bobine (4) pour enrouler une ceinture de sécurité (3),
des moyens de verrouillage (6) comportant un élément de verrouillage (14) auquel la rotation de ladite bobine (4) est normalement transmise par l'intermédiaire d'un premier mécanisme de limitation de charge de ceinture de sécurité (7) de sorte que l'élément de verrouillage (14) tourne avec la bobine (4) et dont la rotation dans la direction de retrait de la ceinture de sécurité est empêchée en cas d'urgence, dans lequel, lorsque la rotation dudit élément de verrouillage (14) dans la direction de retrait de la ceinture de sécurité est empêchée de sorte que ladite bobine (4) tourne par rapport audit élément de verrouillage (14) dans la direction de retrait de la ceinture de sécurité, la charge appliquée à ladite ceinture de sécurité (3) est limitée par ledit premier mécanisme de limitation de charge de ceinture de sécurité (7),
un deuxième mécanisme de limitation de charge de ceinture de sécurité (41) prévu coaxialement avec ladite bobine (4) pour modifier la charge limitée de la ceinture de sécurité (3) en cas d'urgence conformément à des informations dans la situation d'urgence telles que la taille physique d'un occupant, la position d'un siège dans la direction antéropostérieure, la vitesse de la collision, l'accélération de la collision et le type de collision, et
une unité de commande (52) qui met ledit deuxième mécanisme de limitation de charge de ceinture de sécurité (41) dans l'état de non fonctionnement normalement et lorsqu'une condition prédéterminée n'est pas satisfaite même en cas d'urgence, et met ledit deuxième mécanisme de limitation de charge de ceinture de sécurité (41) dans l'état de fonctionnement lorsque la condition prédéterminée est satisfaite en cas d'urgence,
**caractérisé en ce que**
ledit deuxième mécanisme de limitation de charge de ceinture de sécurité (41) comprend un élément de support d'absorbeur d'énergie (43) qui est agencé coaxialement avec ladite bobine (4) et qui est capable de tourner par rapport à ladite bobine (4), et un absorbeur d'énergie (42) comprenant une plaque d'absorption d'énergie semblable à une bande allongée qui est disposée entre ladite bobine (4) et ledit élément de support d'absorbeur d'énergie (43) et qui absorbe l'énergie lorsque ledit élément de support d'absorbeur d'énergie (43) tourne par rapport à ladite bobine (4), et
ladite unité de commande (52) permet audit élément de support d'absorbeur d'énergie (43) d'être autorisé à tourner avec ladite bobine (4) normalement et lorsque la condition prédéterminée n'est pas satisfaite même en cas d'urgence, et permet audit élément de support d'absorbeur d'énergie (43) d'être autorisé à tourner par rapport à ladite bobine (4) lorsque la condition prédéterminée est satisfaite en cas d'urgence.

2. Rétracteur de ceinture de sécurité selon la revendication 1, comprenant en outre un troisième mécanisme de limitation de charge de ceinture de sécurité (53) pour limiter une charge appliquée à ladite ceinture de sécurité (3) en cas d'urgence, dans lequel ledit troisième mécanisme de limitation de charge de ceinture de sécurité (53) est disposé entre ladite bobine (4) et ledit élément de verrouillage (14).

3. Rétracteur de ceinture de sécurité selon la revendication 2, dans lequel, lorsque la rotation dudit élément de verrouillage (14) est empêchée dans la direction de retrait de la ceinture de sécurité de sorte que ladite bobine (4) tourne par rapport audit élément de verrouillage (14) dans la direction de retrait de la ceinture de sécurité, la charge appliquée à ladite ceinture de sécurité (3) est d'abord limitée par les premier et troisième mécanismes de limitation de charge de ceinture de sécurité (7, 53) ou la charge appliquée à ladite ceinture de sécurité (3) est d'abord limitée par les premier à troisième mécanismes de limitation de charge de ceinture de sécurité (7, 41, 53) et la charge appliquée à ladite ceinture de sécurité (3) est au moins finalement limitée uniquement par le premier mécanisme de limitation de charge de ceinture de sécurité (7).

4. Rétracteur de ceinture de sécurité selon la revendication 2 ou 3, dans lequel ledit troisième mécanisme de limitation de charge de ceinture de sécurité (53) comprend une broche d'absorption d'énergie (54) qui est insérée de manière coulissante dans un trou axial (4c) allongé formé dans ladite bobine (4) et qui pénètre dans ledit élément de verrouillage (14), dans lequel, lorsque ladite bobine (4) tourne par rapport audit élément de verrouillage (14) dans la direction de retrait de ceinture de sécurité, la charge appliquée à ladite ceinture de sécurité (3) est limitée par la charge de traction lorsque ladite broche d'absorption d'énergie (54) est tirée hors du trou axial (4c) de ladite bobine (4).

5. Rétracteur de ceinture de sécurité selon l'une quelconque des revendications 1 à 4, dans lequel ledit premier mécanisme de limitation de charge de ceinture de sécurité comprend une barre de torsion (7) disposée entre ladite bobine (4) et ledit élément de verrouillage (14).

6. Dispositif de ceinture de sécurité comprenant au moins : un rétracteur de ceinture de sécurité (1) qui enroule une ceinture de sécurité (3) ; une languette supportée de manière coulissante par ladite ceinture de sécurité (3) extraite du rétracteur de ceinture de sécurité (1) ; et une boucle à laquelle ladite languette peut être accrochée de manière détachable, dans lequel le retrait de ladite ceinture de sécurité (3) est empêché par le rétracteur de ceinture de sécurité (1) en cas d'urgence, retenant de ce fait un occupant,
dans lequel ledit rétracteur de ceinture de sécurité est un rétracteur de ceinture de sécurité (1) selon l'une quelconque des revendications 1 à 5.
